# EUROPEAN PATENT SPECIFICATION

(11) **EP 2 141 528 B1**
(45) Date of publication and mention of the grant of the patent: **12.02.2020**
(21) Application number: 09251715.0
(22) Date of filing: 02.07.2009
(51) Int. Cl.: G02B 6/44

(54) **Optical fibre distribution box**
Glasfaserverteilerkasten
Boîte de distribution de fibres optiques

(30) Priority: 04.07.2008 GB 0812270
(43) Date of publication of application: 06.01.2010
(73) Proprietor: CommScope Connectivity Belgium BVBA, 3010 Kessel-Lo (BE)
(72) Inventor: Vastmans, Kristof, 3370 Boutersem (BE)
(74) Representative: Greenwood, Matthew David

(56) References cited:
- EP-A- 0 531 628
- EP-A- 0 626 603
- FR-A- 2 917 184
- US-A- 4 874 904
- US-A- 5 012 043
- US-A- 5 619 608
- US-B1- 6 379 166
- US-B1- 7 220 144

## Description

### Field of the Invention

The present invention relates to an optical fibre distribution box. In particular, the present invention relates to a modular optical distribution box for use in a passive optical network.

### Background of the Invention

Optical fibre distribution boxes are known. In a typical optical signal distribution system or network, such as that provided within an office, outside service provider cables from a provider are routed to the office and it is necessary to further route individual optical fibres or fibre bundles coupled to the outside service provider cables to individual end users. The cables from the provider pass through building distribution boxes, typically provided in the basement, and/or distribution cabinets provided throughout the building.

In newer optical signal distribution networks, such as those provided within a multiple dwelling unit (such as a building or block of offices) an outside provider cable is routed, via a building distribution box, to riser cables which feed individual dwelling units (such as apartments or offices) within the multiple dwelling unit.

The space available for the optical network or distribution system within a multiple dwelling unit (MDU) is typically particularly limited, especially within a services riser shaft carrying the riser cables.

As the number of outside service provider fibres increase and as the take up of fibre technology increases, the number of fibres to be managed within the same available space, and the operations (for example, splices, tap offs etc) required to manage those fibres increases dramatically.

Whilst various optical fibre distribution boxes exist, they each have certain shortfalls, for example, the space taken up by a fibre distribution box may be particularly inappropriate for a riser shaft environment, especially since either too many or too few connections to end users may be provided by a given size of distribution box and assembly of the distribution box may be particularly difficult within the limited space of a riser shaft.

US 5 619 608 describes an enclosure assembly comprising a plurality of trays disposed in a stack attached to a backbone. The trays are pivotally mounted to said backbone and each of the trays is inclined at a common angle to a longitudinal axis of the stack.

EP 0531 628 describes a device for dividing optical fibre cables and wires. The device comprises a housing, in which one or more trays are provided. Those trays provide dividing and distributing means for passing optical fibres or fibre bundles out to further distributing devices, and for connecting optical fibres or fibre bundles to a subscriber connection. The trays are detachably mountable or hingeable in the housing.

EP 0626 603 describes an optical fibre enclosure comprising a series of trays stacked within a main housing.

US 6 379 166 describes a cable outlet box including an optical fibre connector strip mounted on the front face of a deep outlet box.

US 4 874 904 describes an outlet box having a removable faceplate. A portion of optical fibre is stored in coiled condition within the box. When the faceplate is removed from the outlet box, the coiled portion of the fibre allows the faceplate to be moved a substantial distance from the outlet box for access to a coupled connection between an optical fibre and bulkhead connector without subjecting the fibre to excessive bending stress.

FR 2 917 184 describes a junction box having a chamber which includes at least two different locations for receiving optical fibre coils such that they extend in different planes from one another.

US 7,220,144 B1 describes a telecommunications outlet box having a housing with multiple positions for mounting a connector holder , the connector holder for use in mounting a plurality of connectors within the housing.

Accordingly, it is desired to provide an improved fibre distribution box.

### Summary of the Invention

Accordingly, one aspect of the present invention provides a modular optical fibre distribution box operable to receive a fibre from a fibre optic cable and distribute said fibre to a user, said modular optical fibre distribution box comprising a plurality of stackable layers, said plurality of stackable layers including a first layer configured to receive said fibre optic cable at an inlet port, and a second layer configured to distribute said fibre to said user, said second layer being operable to engage with said first layer in a plurality of orientations, and having an outlet port on at least one side, said outlet port being arranged to direct said fibre towards a user, in different lateral directions about a stacking axis of said plurality of stackable layers according to said orientation of engagement between said first and second layers, characterised by: said first layer including an interior guide channel operable to guide said fibre optic cable from said inlet port straight to a first outlet port and operable to guide said fibre optic cable through a 180 degree turn from said inlet port to a second outlet port.

Provision of a set of layers, each layer providing a different function, allows for significant flexibility within the fibre distribution box. It is possible, for example, to extract a fibre from a cable on one layer of the distribution box and route it to another layer to perform a further operation, such as redirection to an end user, splicing to another fibre. Once re-routed to a second layer, the first layer may be substantially closed by the addition of a further layer. In some situations this can have the advantage that the first layer is then substantially closed and further work need only be carried out on the additional layer.

It will be understood that since it is no longer the case that all functions to be performed by the fibre distribution box must be accommodated within a single layer, each layer can be of reduced dimension. Provision of all functions within a single layer necessarily requires a particular relative arrangement of the functional features of a layer.

Ensuring that the second layer is operable to engage with the first layer in a plurality of orientations allows for increased flexibility in terms of assembly of the stackable fibre distribution box in a limited space environment. Such an arrangement also allows for improved ease of construction for any operative assembling said distribution box within a riser, for example, reorientation of the second layer on the first layer may quickly and easily provide a way to change the direction in which fibres leave the second layer to reach an end user, without the requirement for a different layer.

The second layer comprises an output port on at least one side, that output port being arranged to direct said fibres towards a user. Provision of an output port on at least one side, coupled with the ability to engage the second layer with first layer in a plurality of orientations, allows for an operative to change the direction in which fibres exit the second layer and are directed to an end user without requiring a different second layer.

For example, the outlet port could be configured such that the fibres exit the modular distribution box on the left hand side, or if the second layer is rotated 180 degrees with respect to the first layer then the fibres may be directed to a user from the right hand side of the optical fibre distribution box. If rotated 90 degrees or 270 degrees with respect to the first orientation, the fibres may exit the second layer the fibre distribution box substantially aligned with the longitudinal axis of the cable i.e. at the top or at the bottom of the fibre distribution box. This positional flexibility can be provided with a single suitably arranged second layer.

Each layer may include only one working surface. That working surface may be the front face of a layer. Provision of a layer that has only one working surface allows an operative to work more easily on each layer of the stack. The operative only requires access to the front face of a layer to complete work on that layer.

Each layer may perform a number of functions, and/or each layer may offer a number of ways to perform a particular function. In the case of the first layer, for example, the cable may be arranged to pass through that layer and continue to another destination in a substantially linear manner, or may, for example, be redirected by the first layer and perform a 180 degree change of direction. Furthermore the first layer may provide an area for storage of overlength fibre.

The second layer may be configured to distribute the fibre to the user in a number of ways. It will be understood that the second layer may include various passive optical components including, for example, a splice, a multiplexing unit or a splitter. Said second layer may include a receiving and retaining means to hold a passive optical component in position on the second layer.

The outlet port of the second layer may include a receiving port which is arranged to receive a termination unit. Provision of a receiving portion to receive termination unit allows the same second layer to be used for a variety of termination units including, for example, optical adaptors, tie off points and/or simply tap off distribution ports. The termination unit may include a plurality of fibre outlets. A termination unit may be inserted into the receiving portion in the outlet port, or may be integrally formed with the outlet port of the second layer.

The second layer may be further configured to engage and stack with a third layer, said third layer being configured to receive a fibre and distribute said fibre to said user.

Provision of a series of layers that can stack allows the fibre distribution box to be substantially future-proof. Furthermore, it allows for increased flexibility within the optical fibre distribution box since an operative using the distribution box may, for example, arrange that two fibres can leave the distribution box from the second layer using fibre adaptors and a further four, for example, fibres may leave the distribution box from the third layer from termination ports. Such an arrangement of stackable layers is therefore particularly adaptable and flexible and the needs of an operative and end users may be met by growing the set of stackable layers within the distribution box to suit the requirements of any given location.

The first layer may further comprise a fibre routing gap which is connectable to any one of the other layers of the stack. In this manner a fibre or fibre bundle from the cable can be routed directly to the layer in which it is required and not routed via any other layers.

The second layer and the third layer may be substantially identical. Such an arrangement has the advantage that only two different layers need be provided. Further second layers may be provided to an operative as fibre distribution box extension kits. If the layers are substantially identical, the distribution box is simply growable to the correct size for the applicable intended. The modular optical fibre distribution box may further include a transition layer which enables two substantially identical layers to be stacked as described above. A third transition layer may act to protect the contents of the first or second layers.

One or more layers of the modular optical fibre distribution box may include a receiving channel for routing the fibre between layers. Each layer may be provided with one or more receiving channels. Those receiving channels may be substantially symmetrically disposed around a layer such that the layer may route a fibre between layers when the layer is in any one of a plurality of orientations. The receiving channel may be provided along an edge of a layer. Provision of a receiving channel for routing fibres between layers assist the growability of the modular fibre distribution box.

At least one layer may include a securing portion arranged to locate and secure the passive optical component on said layer. It will be understood that a second layer of an optical fibre distribution box in accordance with the present invention may simply be used as a tapping off layer. A tap off layer simply re-routes a fibre from a cable directly to a user, without passing through an optical component, for example, a splice.

The optical fibre routed from the cable may, however, be spliced in the second layer before being re-routed to an end user. Provision of a securing portion arranged to locate and secure the passive optical component on a second layer thus allows for increased flexibility for an operative installing an optical fibre distribution box without the requirement for a specific layer for each possible passive optical component.

A modular optical fibre distribution box may further comprise a cover layer. That cover layer provides protection to fibres housed in the optical fibre distribution box from dust, water ingress and forces applied to fibres leaving the distribution box.

Further particular and preferred aspects of the present invention are set out in the accompanying independent and dependent claims. Features of the dependent claims may be combined with the features of the independent claims as appropriate, and in combinations other than those explicitly set out in the claims.

### Brief Description of the Drawings

Embodiments of the present invention will now be described, with reference to the accompanying drawings, in which:
**Figure 1** illustrates a cable distribution arrangement;
**Figure 2** illustrates an arrangement of an optical cable;
**Figure 3** illustrates an arrangement of a multiple dwelling unit building distributor according to an embodiment;
**Figure 4** is a perspective view of a first layer for use in a modular fibre distribution box in accordance with a first embodiment of the present invention;
**Figure 5** is plan view of the layer of **Figure 4****;**
**Figure 6** is a perspective view of a second layer for use in an optical fibre distribution box in accordance with a first embodiment of the present invention;
**Figure 7** is a plan view of the layer of **Figure 6****;**
**Figure 8** shows a number of termination units for use in a second layer in accordance with **Figure 6****;**
**Figure 9** is a plan view of the termination units shown in **Figure 8****;**
**Figure 10** is an exploded perspective view of a first fibre distribution box in accordance with the present invention;
**Figure 11** is a perspective view of the fibre distribution box of **Figure 10****;** and

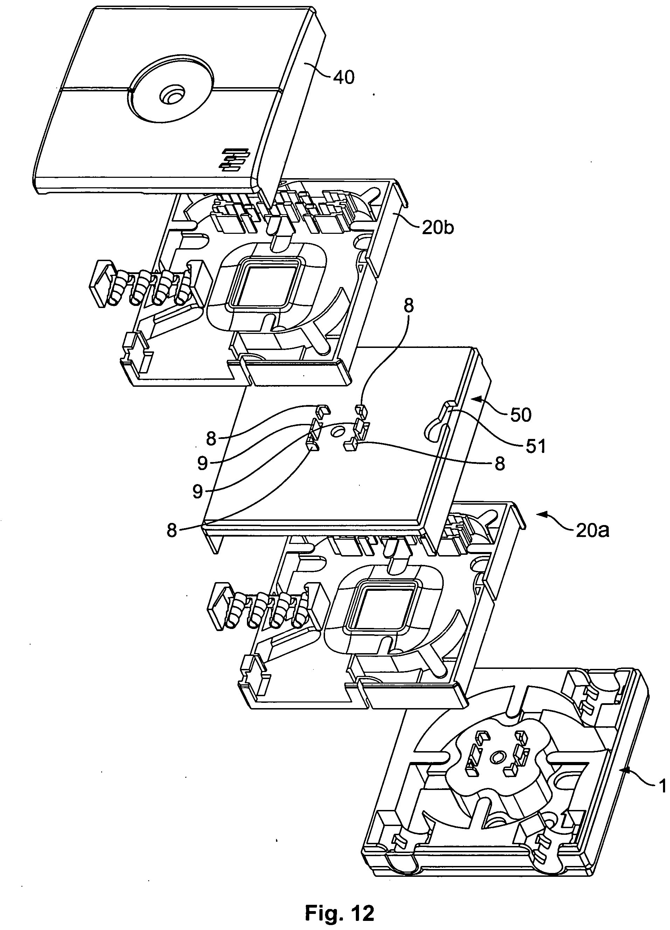

**Figure 12** is an exploded perspective view of a second fibre distribution box in accordance with the present invention.

### Description of the Embodiments

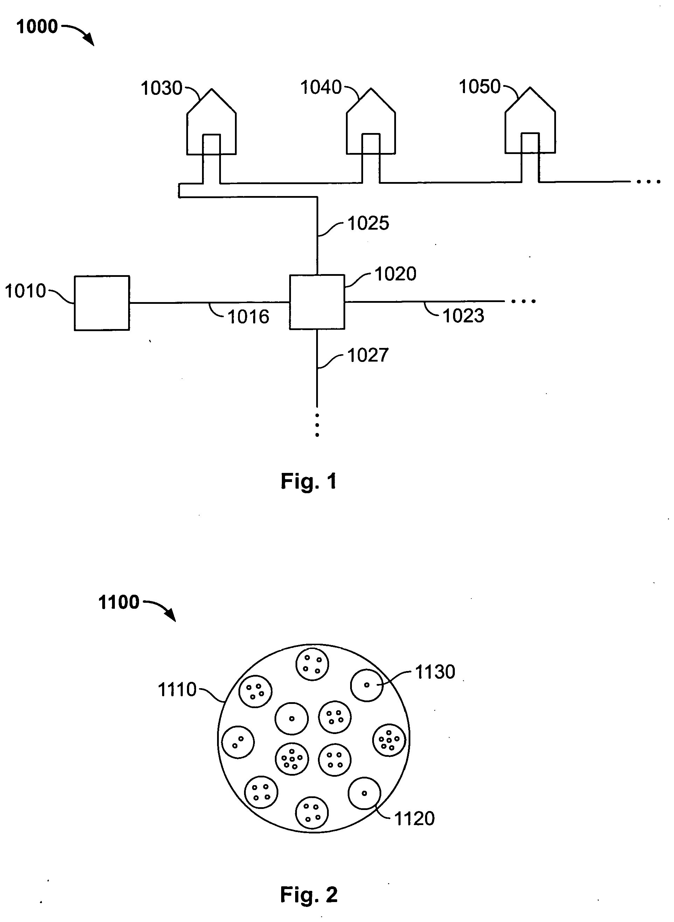

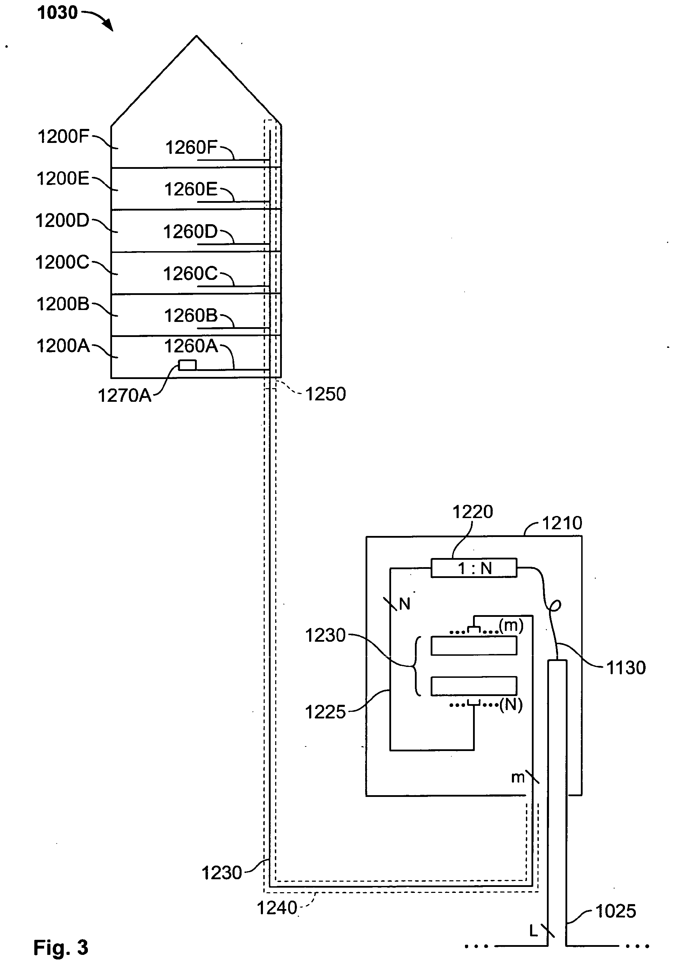

**Figure 1** illustrates a cable distribution arrangement 1000. A central office 1010 associated with a service provider is coupled with a distribution point 1020 by an outside service provider cable 1015. Distribution point 1020 may be coupled with further distributions points (not shown) using outside service provider distribution cables 1023 and 1027. The distribution point 1020 couples with one or more multiple dwelling units 1030, 1040, 1050, using an outside service provider distribution cable 1025. The outside service provider distribution cable 1025 loops through each multiple dwelling unit 1030, 1040, 1050 in turn. The outside service provider distribution cable 1025 may also loop through further multiple dwelling units (not shown). In this way, it can be seen that the service provider couples via an optical network with the multiple dwelling units 1030, 1040, 1050. Details of how the outside service provider distribution cable 1025 is then utilised within the multiple dwelling units 1030, 1040, 1050 are described below, with reference to **Figure 3****.**

**Figure 2** illustrates a typical arrangement of an optical cable 1100, such as would be utilised for the outside service provider cable 1015, the outside service provider distribution cables 1023, 1025, 1027, or for cables utilised within the multiple dwelling units 1030, 1040, 1050. The cable 1100 comprises an outer jacket 1110 which provides for appropriate environmental protection of the cable 1100. Disposed within the cable jacket 1110 is a plurality of tubes 1120. Within the tubes 1120 are provided one or more individual fibres 1130. Typically 16 or 32 individual fibres 1130 may be provided within a single tube 1120. Also a braided Kevlar (registered trade mark) strand (not shown) may be provided within cable 1100 which may be mechanically coupled with a pulling tool to assist in routing the cable.

**Figure 3** illustrates an arrangement of a multiple dwelling unit building distributor 1210 for dwelling unit 1030 according to one embodiment. In the example shown in **Figure 3****,** the multiple dwelling unit 1030 comprises a single dwelling unit 1200A-1200F on each floor. However, it will be appreciated that more than one dwelling unit may be provided on each floor of the building. The other multiple dwelling units 1040, 1050 will generally have a similar general layout, although the number of floors and the number of dwelling units on each floor may vary from multiple dwelling unit to multiple dwelling unit.

The multiple dwelling unit building distributor 1210 receives the outside surface provider distribution cable 1025. One or more fibres 1130 from the outside service provider distribution cable 1025 are pulled from the outside service provider distribution cable 1025 and typically coupled with a splitter 1220. It will be appreciated that more than one splitter unit 1220 may be provided and that more than one fibre 1130 may be extracted from the outside service provider distribution cable 1025, according to the needs of the multiple dwelling unit 1030. The splitter 1220 takes a single fibre 1130 and couples this fibre, typically using splicing techniques, with a plurality N of pigtail cables 1225. The plurality of pigtail cables 1225 are provided to a patching arrangement 1230 which enables the plurality of pigtails 1225 to be selectively coupled with a riser cable 1230 comprising a plurality M of fibres which leaves the multiple dwelling unit building distributor 1210.

The riser cable 1230 is routed through a building region 1240 to a riser 1250. The building region 1240 may be, for example, a basement area of the multiple dwelling unit 1030. The riser cable 1230 may be surface mounted in the building region 1240.

The riser 1250 will typically be a service conduit within the multiple dwelling unit 1030 extending from the basement to the under-roof region of the building. The riser 1250 will therefore extend between the floors of the multiple dwelling unit 1030.

Within each dwelling unit 1200A-1200F, one or more fibres 1260A-1260F may be pulled from the riser cable 1230 in order to provide connectivity within the individual dwelling units 1200A-1200F. User equipment 1270A may then couple with the associated fibres 1260, as required.

It will be appreciated that arrangement enables user equipment within individual dwelling units to be coupled via the optical network with the service providers. Also, the presence of the patch arrangement 1230 within the multiple dwelling unit building distributor 1210 enables connectivity with different service providers to be achieved.

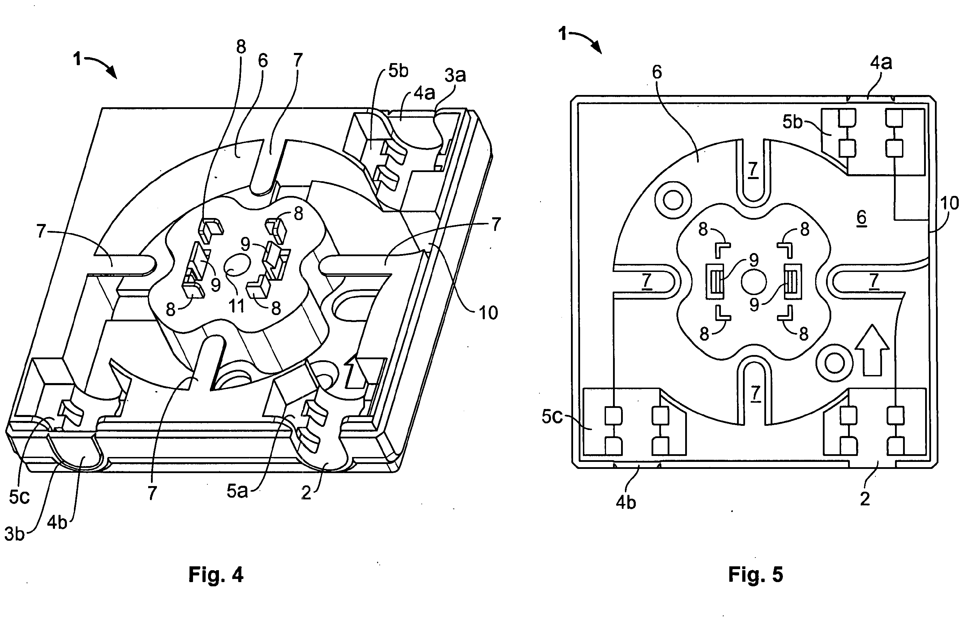

**Figures 4 and 5** show a first layer of a modular fibre distribution box in accordance with the present invention. The first layer 1 is substantially square in shape and substantially flat. One side includes a cable inlet port 2 and there are also provided two cable outlet ports 3. The first cable outlet port 3a is provided such that a cable, such as a riser cable 1230, can be routed straight through the layer 1. The second cable outlet port 3b is located for the instances in which a cable is to pass through 180 degrees before exiting the layer 1.

Each of the outlet ports 3a, 3b includes a 'push-out' element 4a, 4b which may be pushed out when it is intended to use that particular output port. The inlet and outlet ports each have adjacent to them a restraining region 5a, 5b, 5c. In those restraining regions, a cable passing through the layer may be secured with respect to the layer. In the embodiment shown, each of those regions include openings for receiving a cable tie.

The interior region of layer 1 further includes a cable guide channel 6 which assists in guiding a cable entering the first layer from the inlet port to either of the outlet ports 3a, 3b. In particular, it can be seen that the guide channel 6 is dimensioned such that a cable entering the inlet port and performing a 180 degree turn does not exceed the minimum bend radius of any fibres contained therein.

Located over the cable guide channel there are a series of retaining tabs 7. Those cable tabs act to secure the cable, or fibres extracted from the cable, within the guide channel 6.

The first layer 1 also includes a number of alignment pins 8 for alignment of the first layer with the second layer and a number of securing pins 9 securing a second layer with respect to the first layer. The layer also includes a fibre routing gap 10. That fibre routing gap allows fibres or fibre bundles extracted from a cable passing through the first layer 1 to be rerouted to any other layer of a fibre distribution box.

In use, the first layer of the fibre distribution box is used by an operative to provides a base for a fibre distribution box at a point where it is intended to extract a fibre or fibres from a riser cable passing through a building 1230. To perform this operation, it is necessary for an operative to remove a portion of the cable jacket 1110. An operative will remove a portion of the cable jacket, by making a cut known as a 'window cut' in the cable jacket. Making such a 'window cut' exposes fibres and fibre bundles 1120, 1130 housed within the riser cable 1230.

The cable including the 'window cut' is routed through the first layer of the micro distribution box 1. A fibre or fibres to be routed to the end-users through the distribution box is extracted from the cable. The relevant fibres are extracted by pulling, for example, from the cable. The extracted fibres are routed towards the fibre routing gap 10 from where they can pass to other layers of the stackable modular micro distribution unit. The cable is secured in place within the first layer by cable ties provided in the restraining regions 5.

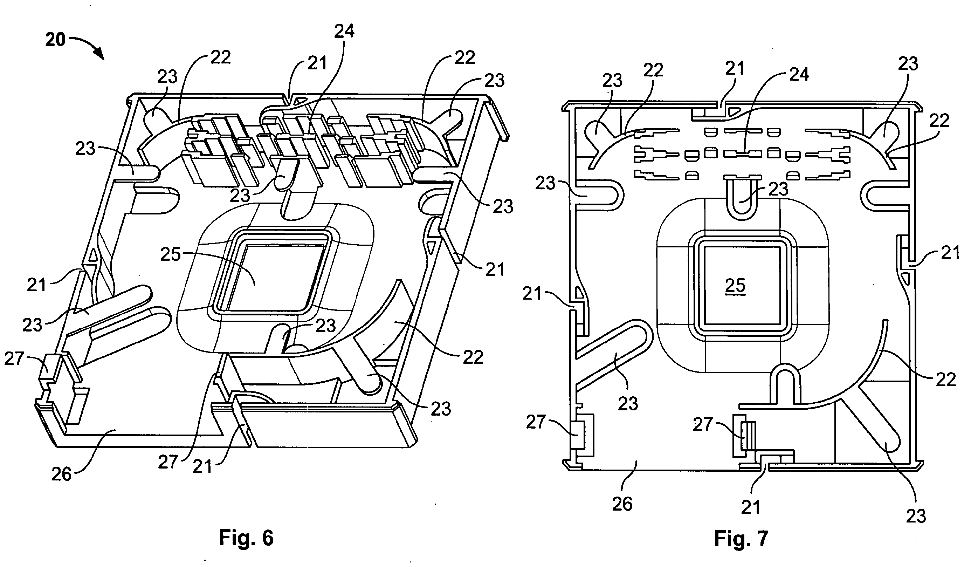

**Figures 6 and 7** illustrate a second layer for use in a fibre distribution box in accordance with the present invention. Said second layer includes a number of receiving channels 21 disposed around its edges. Those receiving channels are substantially symmetrically placed such that the second layer may be engaged and aligned with the first layer in a number of orientations.

The second layer also includes a number of fibre guides 22 disposed within the layer such that a fibre entering from anyone of the receiving channels 21 may be guided around within the second layer without exceeding the minimum bend radius of the fibres. The fibres entering, or arranged within the second layer are retained in place by a series of retaining tabs 23 provided in various locations typically close to bend regions of the fibre such that the fibres are retained in place securely.

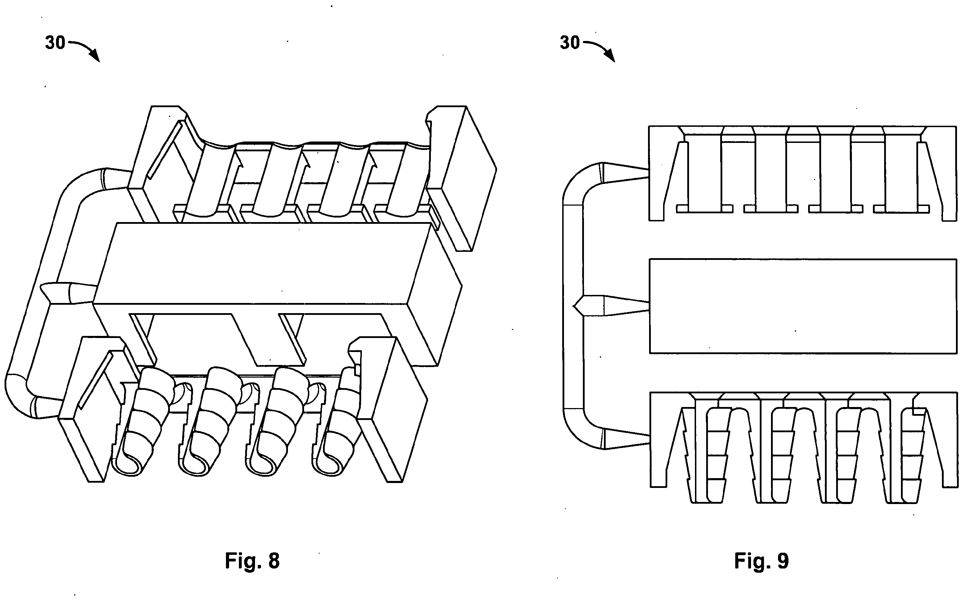

On the one side of the layer 20 there is also included an outlet region 26. The outlet region allows fibres entering the second layer to exit the second layer and be directed towards an end-user. The outlet region includes two termination unit engagement pins 27 that are used to locate various termination units, shown in **Figures 8 and 9** in position on the second layer.

The second layer may also include a passive optical component. That passive optical component may, for example, be a splice or splice together, though neither are shown in **Figure 6** or **Figure 7****.** However, that optical component may be held in place on the second layer by component engaging elements 24.

In the central region of the second layer 20 there is provided an alignment opening 25.

In use, a fibre exits the first layer shown in **Figures 4 and 5** via the fibre routing gap 10 and is routed towards one of the receiving channels 21 provided in the second layer 20. The fibre(s) may then be directed from any one of the receiving channels towards an optical component provided in the component engaging elements 24 or may for example simply loop within the second layer towards the outlet port 26. Fibres exiting an optical component provided in the second layer are also routed by the guide means 22 towards the outlet region 26.

The second layer is aligned and secured on the first layer by the alignment pins 8 engaging with the alignment opening 25 and securing pins 9 snap fit with the edge of alignment opening 25.

**Figures 8 and 9** show various termination unit inserts 30 that may be inserted in the outlet region 26 of the second layer. It will be understood that those termination units may allow the second layer of the distribution box to have a connector patch connection outlet function, a tap off function or a fibre fixation function.

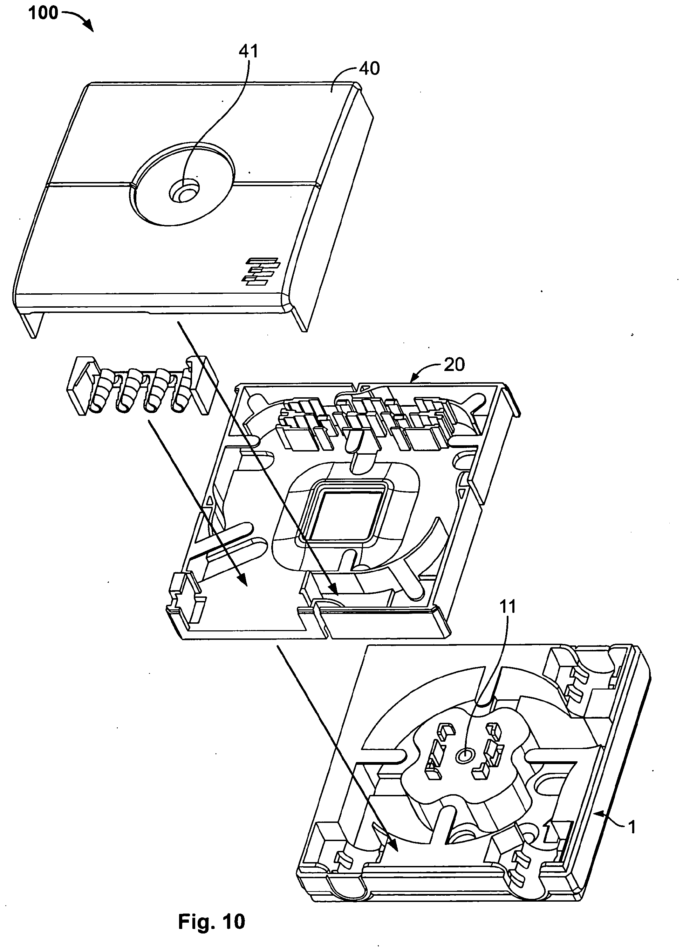

**Figure 10** is an exploded perspective view of a fibre distribution box in accordance with the present invention. It can be seen that the complete fibre distribution box further includes a cover layer 40 that fits over the second layer and protects the contents of the second layer of the fibre distribution box.

The cover layer includes 40 includes the hole 41 that receives a box fastening device (not shown), for example a screw, that engages with a hole 11 provided on layer 1. This fastening device clamps all layers of the fibre distribution box together and allows the cover to more effectively protect the cable and the fibres contained therein from outside elements.

It will be understood that although the second layer 20 is shown in **Figure 10** in a particular orientation with respect to the first layer 1, the second layer may be rotated through 90, 180 or 270 degrees and still engage with the first layer.

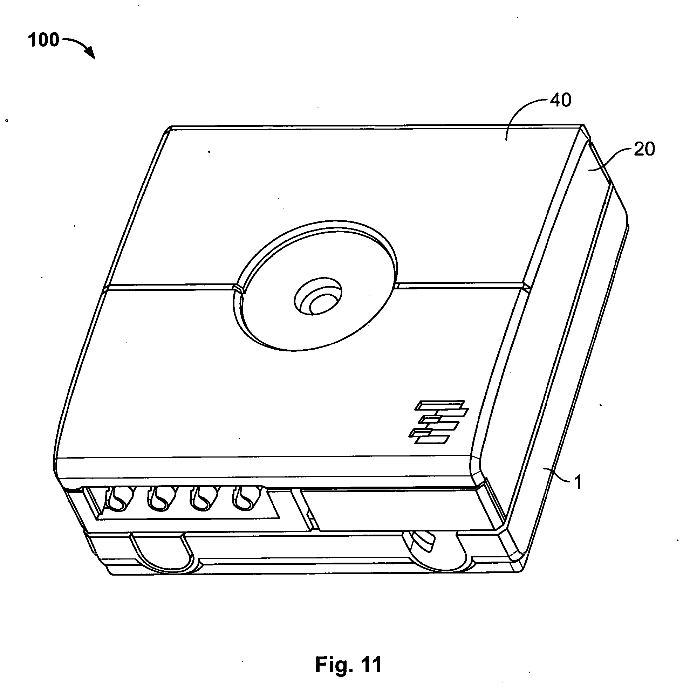

**Figure 11** shows another arrangement of the layers shown in previous Figures. In this arrangement, the fibre distribution box includes two second layers 20a, 20b arranged to direct fibres towards end-users. The layers are stacked by using an intermediate layer 50.

The intermediate layer 50 includes a further set of alignment pins 8 and securing pins 9. It also includes an opening 51 for receiving a fibre or fibre bundle from a second layer 20a or first layer I so that those fibre or fibre bundles can be re-routed into a second layer 20b. It will be understood that the provision of the further intermediate layers and further second layers allows the further distribution box to grow to the size required.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention as defined by the appended claims and their equivalents.

## Claims

1. A modular optical fibre distribution box operable to receive a fibre from a fibre optic cable and distribute said fibre to a user, said modular optical fibre distribution box comprising a plurality of stackable layers (1, 20), said plurality of stackable layers including a first layer (1) configured to receive said fibre optic cable at an inlet port (2), and a second layer (20) configured to distribute said fibre to said user, said second layer (20) being operable to engage with said first layer (1) in a plurality of orientations, and having an outlet port (26) on at least one side, said outlet port (26) being arranged to direct said fibre towards a user, in different lateral directions about a stacking axis of said plurality of stackable layers (1, 20) according to said orientation of engagement between said first and second layers (1, 20), wherein said first layer (1) including an interior guide channel (6) operable to guide said fibre optic cable from said inlet port (2) straight to a first outlet port (3a) or operable to guide said fibre optic cable through a 180 degree turn from said inlet port (2) to a second outlet port (3b).

2. A modular optical fibre distribution box according to claim 1, wherein the outlet port (26) comprises a receiving portion arranged to receive a termination unit (30).

3. A modular optical fibre distribution box according to claim 2, wherein the termination unit (30) is integrally formed with the outlet port (26).

4. A modular optical fibre distribution box according to any preceding claim, wherein the second layer (20a) is further configured to engage and stack with a third layer (20b), said third layer (20b) being configured to receive a fibre and distribute said fibre to said user.

5. A modular optical fibre distribution box according to claim 4, wherein said second layer (20a) and said third layer (20b) are substantially identical.

6. A modular optical fibre distribution box according to any preceding claim, wherein one or more layers (50) include a receiving channel (51) for routing a fibre between layers.

7. A modular optical fibre distribution box according to any preceding claim, wherein at least one layer (20) includes a securing portion (24) arranged to locate and secure a passive optical component on said layer (21).

8. A modular optical fibre distribution box according to any preceding claim, further comprising a cover layer (40).

9. A modular optical fibre distribution box according to claim 2 or claim 3, wherein the termination unit (30) includes a plurality of fibre outlets.

10. A modular optical fibre distribution box according to any preceding claim, wherein each of said first and second outlet ports (3a, 3b) of said first layer (1) includes a 'push out' element (4a, 4b).

11. A modular optical fibre distribution box according to any preceding claim, wherein each of said inlet port (2) and said first and second outlet ports (3a, 3b) of said first layer (1) are adjacent a respective restraining region (5a, 5b, 5c).

12. A modular optical fibre distribution box according to any preceding claim, wherein a series of retaining tabs (7) are located over said interior guide channel (6).

## Patentansprüche

1. Modularer Glasfaserverteilerkasten, der betriebsfähig ist, um eine Faser von einem Glasfaserkasten aufzunehmen und die Faser an einem Benutzer zu verteilen, wobei der modulare Glasfaserverteilerkasten mehrere stapelbare Schichten (1, 20) aufweist, wobei die mehreren stapelbaren Schichten umfassen: eine erste Schicht (1), die konfiguriert ist, um das Glasfaserkabel an einer Einlassöffnung (2) aufzunehmen, und eine zweite Schicht (20), die konfiguriert ist, um die Faser an den Benutzer zu verteilen, wobei die zweite Schicht (20) betriebsfähig ist, um in mehreren Orientierungen mit der ersten Schicht (1) einzugreifen, und die auf wenigstens einer Seite eine Auslassöffnung (26) hat, wobei die Auslassöffnung (26) eingerichtet ist, um die Faser gemäß der Orientierung des Eingriffs zwischen den ersten und zweiten Schichten (1, 20) in verschiedenen seitlichen Richtungen um eine Stapelachse der mehreren stapelbaren Schichten (1, 20) in Richtung eines Benutzers zu führen, wobei die erste Schicht (1) einen inneren Führungskanal (6) umfasst, der betriebsfähig ist, um das Glasfaserkabel von der Einlassöffnung (2) direkt zu einer ersten Auslassöffnung (3a) zu führen, oder betriebsfähig ist, um das Glasfaserkabel über eine 180-Grad-Drehung von der Einlassöffnung (2) zu einer zweiten Auslassöffnung (3b) zu führen.

2. Modularer Glasfaserverteilerkasten nach Anspruch 1, wobei die Auslassöffnung (26) einen Aufnahmeabschnitt aufweist, der eingerichtet ist, um eine Abschlusseinheit (30) aufzunehmen.

3. Modularer Glasfaserverteilerkasten nach Anspruch 2, wobei die Abschlusseinheit (30) integral mit der Auslassöffnung (26) ausgebildet ist.

4. Modularer Glasfaserverteilerkasten nach jedem vorhergehenden Anspruch, wobei die zweite Schicht (20a) ferner konfiguriert ist, um mit einer dritten Schicht (20b) einzugreifen und gestapelt zu werden, wobei die dritte Schicht (20b) konfiguriert ist, um eine Faser aufzunehmen und die Faser an den Benutzer zu verteilen.

5. Modularer Glasfaserverteilerkasten nach Anspruch 4, wobei die zweite Schicht (20a) und die dritte Schicht (20b) im Wesentlichen identisch sind.

6. Modularer Glasfaserverteilerkasten nach jedem vorhergehenden Anspruch, wobei eine oder mehrere Schichten (50) einen Aufnahmekanal (51) umfassen, um eine Faser zwischen Schichten wegzuleiten.

7. Modularer Glasfaserverteilerkasten nach jedem vorhergehenden Anspruch, wobei wenigstens eine Schicht (20) einen Befestigungsabschnitt (24) umfasst, der eingerichtet ist, um eine passive optische Komponente auf der Schicht (21) zu befestigen.

8. Modularer Glasfaserverteilerkasten nach jedem vorhergehenden Anspruch, der ferne reine Deckschicht (40) aufweist.

9. Modularer Glasfaserverteilerkasten nach Anspruch 2 oder Anspruch 3, wobei die Abschlusseinheit (30) mehrere Faserauslässe umfasst.

10. Modularer Glasfaserverteilerkasten nach jedem vorhergehenden Anspruch, wobei jede der ersten und zweiten Auslassöffnungen (3a, 3b) der ersten Schicht (1) ein 'Herausrück'-Element (4a, 4b) umfasst.

11. Modularer Glasfaserverteilerkasten nach jedem vorhergehenden Anspruch, wobei jede/r des genannten Einlasses (2) und der zweiten Auslassöffnungen (3a, 3b) der ersten Schicht (1) benachbart zu einem jeweiligen Beschränkungsbereich (5a, 5b, 5c) ist.

12. Modularer Glasfaserverteilerkasten nach jedem vorhergehenden Anspruch, wobei eine Reihe von Rückhaltelaschen (7) über dem inneren Führungskanal (6) angeordnet sind.

## Revendications

1. Boîte de distribution de fibres optiques modulaire pouvant être rendue opérationnelle de manière à ce qu'elle reçoive une fibre en provenance d'un câble à fibre(s) optique(s) et qu'elle distribue ladite fibre à un utilisateur, ladite boîte de distribution de fibres optiques modulaire comprenant une pluralité de couches pouvant être empilées (1, 20), ladite pluralité de couches pouvant être empilées incluant une première couche (1) qui est configurée de manière à ce qu'elle reçoive ledit câble à fibre(s) optique(s) au niveau d'un orifice d'entrée (2) et une deuxième couche (20) qui est configurée de manière à ce qu'elle distribue ladite fibre audit utilisateur, ladite deuxième couche (20) pouvant être rendue opérationnelle de manière à ce qu'elle soit engagée avec ladite première couche (1) selon une pluralité d'orientations, et comportant un orifice de sortie (26) sur au moins un côté, ledit orifice de sortie (26) étant agencé de manière à ce qu'il dirige ladite fibre en direction d'un utilisateur, selon des directions latérales différentes par rapport à un axe d'empilement de ladite pluralité de couches pouvant être empilées (1, 20) conformément à ladite orientation d'engagement entre lesdites première et deuxième couches (1, 20), dans laquelle :
ladite première couche (1) incluant un canal de guidage intérieur (6) qui peut être rendu opérationnel de manière à ce qu'il guide ledit câble à fibre(s) optique(s) depuis ledit orifice d'entrée (2) directement jusqu'à un premier orifice de sortie (3a) ou qui peut être rendu opérationnel de manière à ce qu'il guide ledit câble à fibre(s) optique(s) selon un virage à 180 degrés depuis ledit orifice d'entrée (2) jusqu'à un second orifice de sortie (3b).

2. Boîte de distribution de fibres optiques modulaire selon la revendication 1, dans laquelle l'orifice de sortie (26) comprend une section de réception qui est agencée de manière à ce qu'elle reçoive une unité de terminaison (30).

3. Boîte de distribution de fibres optiques modulaire selon la revendication 2, dans laquelle l'unité de terminaison (30) est formée d'un seul tenant avec l'orifice de sortie (26).

4. Boîte de distribution de fibres optiques modulaire selon l'une quelconque des revendications précédentes, dans laquelle la deuxième couche (20a) est en outre configurée de manière à ce qu'elle soit engagée et empilée avec une troisième couche (20b), ladite troisième couche (20b) étant configurée de manière à ce qu'elle reçoive une fibre et à ce qu'elle distribue ladite fibre audit utilisateur.

5. Boîte de distribution de fibres optiques modulaire selon la revendication 4, dans laquelle ladite deuxième couche (20a) et ladite troisième couche (20b) sont sensiblement identiques.

6. Boîte de distribution de fibres optiques modulaire selon l'une quelconque des revendications précédentes, dans laquelle une ou plusieurs couche(s) (50) inclu(en)t un canal de réception (51) pour faire cheminer une fibre entre des couches.

7. Boîte de distribution de fibres optiques modulaire selon l'une quelconque des revendications précédentes, dans laquelle au moins une couche (20) inclut une section de fixation sécurisée (24) qui est agencée de manière à ce qu'elle localise et fixe de façon sécurisée un composant optique passif sur ladite couche (21).

8. Boîte de distribution de fibres optiques modulaire selon l'une quelconque des revendications précédentes, comprenant en outre une couche de recouvrement (40).

9. Boîte de distribution de fibres optiques modulaire selon la revendication 2 ou la revendication 3, dans laquelle l'unité de terminaison (30) inclut une pluralité de sorties de fibre.

10. Boîte de distribution de fibres optiques modulaire selon l'une quelconque des revendications précédentes, dans laquelle chacun desdits premier et second orifices de sortie (3a, 3b) de ladite première couche (1) inclut un élément 'de poussée vers l'extérieur' (4a, 4b).

11. Boîte de distribution de fibres optiques modulaire selon l'une quelconque des revendications précédentes, dans laquelle chaque orifice pris parmi ledit orifice d'entrée (2) et lesdits premier et second orifices de sortie (3a, 3b) de ladite première couche (1) est adjacent à une région de restriction respective (5a, 5b, 5c).

12. Boîte de distribution de fibres optiques modulaire selon l'une quelconque des revendications précédentes, dans laquelle les languettes d'une série de languettes de retenue (7) sont localisées au-dessus dudit canal de guidage intérieur (6).
